# EUROPEAN PATENT APPLICATION

(11) **EP 1 117 090 A1**
(43) Date of publication of application: **18.07.2001**
(21) Application number: 00906678.8
(22) Date of filing: 03.03.2000
(51) Int. Cl.: G11B 3/68, G11B 3/70, B29C 59/02

(54) **METHOD OF PRODUCING RECORDS**

(30) Priority: 27.07.1999 JP 21194099; 20.09.1999 JP 26589999
(71) Applicant: Toyo Kasei Kabushiki Kaisha, Chiyoda-ku, Tokyo 102-0093 (JP)
(72) Inventor: ISHIMARU, Hitoshi Toyo Kasei Kabushiki kaisha, Chiyoda-ku Tokyo 102-0093 (JP)
(74) Representative: Billington, Lawrence Emlyn
(86) International application number: JP0001286
(87) International publication number: WO0108137

(57) **Abstract**

This method presses a sheet mainly made of vinyl resin and formed by calendering to have hardened, mirror-polished surfaces, and provides the surfaces with sound grooves by cutting, to manufacture a record disk.

## Description

### Technical Field

This invention relates to a technique of manufacturing record disks by cutting sound grooves on a disk-shaped sheet, mainly made of vinyl resin.

### Background Art

Phonographic record disks for recording sound, provided with circular sound groove lines thereon, have been manufactured traditionally through a series of steps (1) to (4):
(1) Studio recording step:
   Where the master tape is produced by using a magnetic tape,
(2) Disk recording step:
   Where the sound from the above described master tape is recorded by cutting grooves, by means of a cutting stylus, in a disk (referred to as "lacquer disk") of aluminum coated with a nitrocellulose-based mixture,
(3) Disk recording step:
   Where the above described lacquer disk provided with the sound grooves is treated by the silver mirror reaction and then plated with nickel by electroplating, which is followed by separation of the lacquer disk to make the metal master disk serving as the model for the record disks, and
(4) Pressing step:
   Where an upper and lower mold for pressing are made by using the above described metal master disk, and these molds with a vinyl chloride resin injected in-between as the stock for record disk are compression-molded at elevated temperature, to produce a record disk.
   This method sometimes causes contamination of the vinyl chloride resin with foreign substances present in the space between the mold and the vinyl chloride resin. Another type of problems involved in the conventional method is reduced S/N ratio (S: audio signal from the sound grooves, and N: noise) as a result of wear of the grooves, cut in the lacquer disk according to the above step (2) by means of a cutting stylus to record sound, when the sound is played back several times.

### Disclosure of the Invention

It is an object of the present invention to provide a method for manufacturing record disks, which can solve the problems occurring when sound grooves are cut in the sheet, mainly made of a vinyl resin (e.g., acrylic or vinyl chloride resin), by means of a cutting stylus to form the sound grooves on the record disk stock, the disk manufactured thereby rarely producing noise and keeping a stable S/N ratio even when played back many times.

In order to attain the above object, a first embodiment of the present invention places sheets, mainly made of a vinyl resin and molded by calendering, on both sides of a plate-shaped vinyl chloride resin, as the first step, and presses the laminated sheet at elevated temperature and pressure into the monolithic structure, to manufacture the record disk stock mirror-finished on both sides.

It is preferable to manufacture the record disk stock by kneading an acrylic or vinyl chloride resin incorporated with a lubricant, pigment and its dispersant by a calender roll into a sheet, placing the sheet on both sides of a vinyl chloride core, and pressing the laminated sheet at elevated temperature and pressure by a press molder.

A second embodiment of the present invention forms a hard sheet mainly made of an acrylic or vinyl chloride resin by calendering, and press the sheet, to manufacture the record disk stock mirror-finished on both sides.

It is preferable to manufacture the record disk stock by forming a resin composition mainly composed of an acrylic or vinyl chloride resin by a calender roll into a hard sheet, pressing the hard sheet to have a mirror-finished surface on both sides, and punching the sheet into a disk of desired size.

The resin composition for the hard sheet is of methyl polymethacrylate incorporated with a lubricant composed of a higher fatty acid, pigment and its dispersant, or of vinyl chloride resin incorporated with an MBS-based reinforcing agent, acrylic-based improver as the processing aid, lubricant, organotin-based stabilizer, epoxy-based soybean oil and powdered titanium.

Next, as the second step, the sound grooves are cut in the above described mirror-finished record disk stock by the normal method, to obtain the record disk. This record disk is highly resistant to wear, rarely producing noise even when played back repeatedly, and keeping a stable S/N ratio. It can be easily cut, causing no damage of the cutting stylus nor contamination with foreign substances, unlike the one provided with sound grooves by the conventional mold. The record disk is manufactured by a simpler procedure, and is lighter.

### Best Mode for Carrying Out the Invention

First, a raw material (a flat disk) for a record disk, in which sound grooves have not been made yet, according to a first embodiment of the present invention, and a method for manufacturing the flat disk, will be described. The record disk is obtained by cutting the sound grooves in the flat disk.

For forming the flat disk, a plate-shaped vinyl chloride resin (as the core material) is laminated with sheets, mainly made of vinyl resin, on both sides. The vinyl resin for forming the sheet is a high molecular compound, obtained by polymerizing a monomer having vinyl group

CH₂=CH-

in the molecular structure, and, in particular, selected from the group consisting of acrylic and vinyl chloride resin.

When an acrylic resin is used for the sheet, a polymer of acrylate or methacrylate ester (preferably methyl polymethacrylate) is selected for its high tenacity, coloring easiness and processability.

When a vinyl chloride resin is used for the sheet, on the other hand, the sheet is not formed in one body from a vinyl chloride resin plate , but vinyl chloride resin sheets are laminated on both sides of the core material formed of a vinyl chloride resin plate.

The sheet, whether it is of acrylic or vinyl chloride resin, is formed by kneading the resin incorporated with an internal lubricant, external lubricant, pigment as a colorant and its dispersant, with a calender roll.

Of the above additives, each of the internal and external lubricants is composed of a higher fatty acid, and pigment dispersant is a nonionic surfactant. It is recommended that the resin is incorporated with these additives at a low content, around 1 wt.% or less for the acrylic resin.

When a vinyl chloride resin is used as the core material, it is laminated with vinyl resin sheets on both sides, and pressed at 160°C and around 110 kg/cm² to have a given size and thickness, and formed into the disk stock mirror-finished on both sides.

The disk thus formed has a central hole, flat region around the central hole, on which a label is put, region outside of the flat region, in which the sound grooves are cut, and region of a given width extending from the outermost groove to disk circumference, which is referred to as group guard. The flat region and region referred to as group guard are approximately 3.0 to 3.5 mm thick, and the region in which the grooves are cut is thinner than the other regions, approximately 2.3 to 3.3 mm thick.

When forming sound grooves by cutting in this flat disk, the flat region has a hardened and mirror-finished surface by calendering and pressing, so that cutting by a cutting stylus is smoothly performed, suffering no contamination with foreign substances, unlike the one provided with grooves by the conventional mold, allowing the cutter stylus to be more serviceable. The record disk thus formed has a stable S/N ratio even when played back repeatedly, keeping it at a high level.

The first embodiment of the present invention is described by Embodiment, together with related Comparative Example.

### <Embodiment 1>

A composition of 100 wt. parts of methyl polymethacrylate, 0.666 wt. parts of a composite lubricant (internal and external lubricants) composed of higher fatty acids and 0.3 wt. parts of a pigment and its dispersant was kneaded by a calender roll into a 0.3 mm thick sheet.

The 0.3 mm thick sheet mainly made of methyl polymethacrylate as an acrylic resin was pressed to both sides of a 2 to 3 mm thick vinyl chloride resin plate (core material) at 160°C and approximately 110 kg/cm², to form a flat disk stock with mirror-finished surfaces on both sides.

The flat disk stock was provided with sound grooves by the conventional cutting method on both sides (i.e., both upper and lower sides), to form a record disk.

The record disk thus formed had an S/N ratio close to 48 dB, which showed no deterioration even when the recorded sound was played back approximately 100 times.

### <Comparative Example 1>

Only a vinyl chloride resin was compression molded to form a disk having the same size as that of the common record disk. It was provided with sound grooves by the conventional cutting method on both sides, to form a record disk.

When making sound grooves in this flat disk, the cutting stylus edge was sometimes chipped, and some grooves provided by such a stylus allowed no playback. However, the record disk showed an S/N ratio almost similar to that of the disk prepared by Embodiment 1 for the portion where the cutting stylus had not been chipped.

### <Embodiment 2>

A composition of 100 wt. parts of a vinyl chloride resin, 0.666 wt. parts of a composite lubricant (internal and external lubricants) composed of higher fatty acids and 0.5 wt. parts of titanium as pigment and its dispersant was kneaded by a calender roll into a 0.3 mm thick sheet.

The 0.3 mm thick sheet mainly made of vinyl chloride resin was placed and pressed to both sides of a 2 to 3 mm thick vinyl chloride resin plate (core material) at 160°C and approximately 110 kg/cm², to form a flat disk stock with mirror-finished surfaces on both sides.

The flat disk stock was provided with sound grooves by the conventional cutting method on both sides (i.e., both upper and lower sides), to form a record disk.

The record disk thus formed had an S/N ratio close to 48 dB, which showed no deterioration even when the recorded sound was played back approximately 100 times.

Next, a raw material (a flat disk) for a record disk, in which sound grooves have not made yet, according to a second embodiment of the present invention, and a method for manufacturing the flat disk, will be described. The record disk is obtained by cutting the sound grooves in the flat disk.

The flat disk is formed by kneading a resin composition mainly made of an acrylic or vinyl chloride resin by a calender roll into a hard sheet, and pressing the sheet.

The resin composition comprises an acrylic or vinyl chloride resin incorporated with various additives.

In the case where a resin composition mainly made of an acrylic resin is used, a polymer of acrylate or methacrylate ester (preferably methyl polymethacrylate) is selected as the acrylic resin for its high tenacity, coloring easiness and processability. This methyl polymethacrylate is incorporated with an internal lubricant, external lubricant, pigment as a colorant and its dispersant, to prepare a resin composition.

The internal and external lubricants are composed of a higher fatty acid, and pigment dispersant is a nonionic surfactant.

In case of forming a resin composition mainly made of a vinyl chloride resin, the resin is incorporated with a reinforcing agent, processing aid, lubricant, and stabilizer.

### <Embodiment of resin composite>

| Material | Mixing amount (kg) | Product name or number | Maker |
|---|---|---|---|
| Polymer PVC(D.P.800) | 70 | TK-800 | Shin-Etsu Chemical Co., Ltd. |
| MMA | 30 | Acrypet VR | Mitsubishi Rayon Co., Ltd. |
| MBS | 4.9 | B-203N | Nippon Xeon Co., Ltd. |
| Polymer modifier Processing modifier | 0.7 | B-402 | Nippon Xeon Co., Ltd. |
| Organotin group stabilizer Tin mercaptomethyl | 0.7 | TM-181FS | Katsuta Kako K.K. |
| Plasticizer Epoxidated soybean oil | 0.7 | DE | Daikyo Kasei Kogyo Co., Ltd. |
| Lubricant Internal, external and composite lubricants | 0.35 | S-100 | Riken Vitamin Co., Ltd. |
| | 0.14 | LUVAX-03 21 | Nippon Seiro Co., Ltd. |
| | 0.7 | HL-3000 | Nitsuka Kasei Kogyo K.K. |
| | 0.15 | LX-40A-2 | Kyodo Chemical Co., Ltd. |
| Plate out inhibitor | 0.07 | CX-18 | Katsuta Kako K.K. |
| Coloring agent Titanium oxide | 5.42 | TCA-123 | TOHKEM PRODUCTS CORPORATI ON |
| Carbon black | 1.08 | MP-5503A | Fuji Pigment Co., Ltd. |

The resin composition is prepared by a series of steps, whether it is mainly made of an acrylic or vinyl chloride resin:
(1) The resin composition is extruded by a calender roll, into a 1 to 2 mm thick hard sheet,
(2) The above sheet is mirror-finished on both sides by pressing at around 170 kg/cm²,
(3) The mirror-finished sheet is punched into a disc of a standard size of the common record disk (30, 25 or 17 cm in diameter), to form the record disk stock (flat disk), and
(4) The flat disk is provided with sound grooves, to obtain the record disk.

The above described flat disk prepared by the first embodiment of the present invention has a 3-layer structure with vinyl chloride as the core material laminated with vinyl resin on both sides, whereas the one prepared by the second embodiment is a hard, light disk composed of a single resin composition.

The flat disk prepared by each of the above embodiments of the present invention has hardened and mirror-finished surfaces by calendering and pressing, and is provided smoothly with grooves by a cutting stylus, suffering no contamination with foreign substances, unlike the one provided with grooves by the conventional mold, allowing the cutter stylus to be more serviceable. The record disk thus formed has a stable S/N ratio even when played back repeatedly, keeping it at a high level.

Embodiments to prepare the record disks in accordance with the second embodiment are described below.

### <Embodiment 3>

A composition of 85.2 wt.% of a vinyl chloride resin, 5.9 wt.% of an MBS-based reinforcing agent, 0.9 wt.% of an acrylic-based improver as the processing aid, 1.4 wt.% of a lubricant, 0.9 wt.% of an organotin-based stabilizer, 0.9 wt.% of an epoxidized soybean oil and 4.8 wt.% of powdered titanium was kneaded by a calender roll into a hard sheet.

The sheet thus prepared was pressed at approximately 170 kg/cm², to form a 1.5 mm thick sheet with mirror-finished surfaces on both sides. This sheet was punched into a disk of 30 cm in diameter, to form a record disk stock (flat disk).

The above flat disk was provided with sound grooves by the conventional cutting method on both sides, to form a record disk.

The record disk thus formed had an S/N ratio close to 48 dB, which showed no deterioration even when the recorded sound was played back approximately 100 times.

### <Embodiment 4>

A composition of 99.0 wt.% of methyl polymethacrylate, 0.666 wt.% of a composite lubricant (internal and external lubricants) composed of higher fatty acids, 0.3 wt.% of a pigment and its dispersant, and 0.034 wt.% of a colorant was kneaded by a calender roll into a hard sheet.

The sheet thus prepared was pressed at approximately 170 kg/cm², to form a 1.5 mm thick sheet with mirror-finished surfaces on both sides. This sheet was punched into a disk of 25 cm in diameter, to form a record disk stock (flat disk).

The above flat disk was provided with sound grooves by the conventional cutting method on both sides, to form a record disk.

The record disk thus formed had an S/N ratio close to 48 dB, which showed no deterioration even when the recorded sound was played back approximately 100 times.

## Claims

1. A method for manufacturing record disks, wherein a sheet mainly made of a vinyl resin and formed by calendering is pressed so that it has hardened, mirror-finished surfaces, and said mirror-finished surfaces are provided with sound grooves by cutting.

2. The method for manufacturing record disks according to claim 1, wherein said sheet mainly made of a vinyl resin is mainly made of an acrylic resin.

3. The method for manufacturing record disks according to claim 2, wherein said acrylic resin is a polymer of acrylate ester.

4. The method for manufacturing record disks according to claim 2, wherein said acrylic resin is a polymer of methacrylate ester.

5. The method for manufacturing record disks according to claim 4, wherein said polymer of methacrylate ester is a polymethacrylate ester.

6. The method for manufacturing record disks according to claim 1, wherein said sheet mainly made of a vinyl resin is composed of a polymethacrylate ester incorporated with a lubricant, pigment and dispersant for the pigment.

7. The method for manufacturing record disks according to claim 1, wherein said sheet mainly made of a vinyl resin is mainly made of a vinyl chloride resin.

8. The method for manufacturing record disks according to claim 6 wherein said sheet mainly made of a vinyl resin is composed of a vinyl chloride resin incorporated with a lubricant, pigment and dispersant for the pigment.

9. The method for manufacturing record disks according to claim 1, wherein a plate-shaped vinyl chloride resin as the core material is laminated with a sheet mainly made of a vinyl resin on both sides thereof, pressed to have hardened, mirror-finished surfaces, and provided with sound grooves on both surfaces by cutting.

10. The method for manufacturing record disks according to claim 9, wherein said sheet mainly made of a vinyl resin is mainly made of an acrylic resin.

11. The method for manufacturing record disks according to claim 9, wherein said sheet mainly made of a vinyl resin is mainly made of a vinyl chloride resin.

12. The method for manufacturing record disks according to claim 9, wherein said sheet mainly made of a vinyl resin is obtained by mixing and kneading a vinyl chloride resin incorporated with a lubricant, pigment and dispersant for the pigment.

13. The method for manufacturing record disks according to claim 12, wherein said lubricant is composed of a higher fatty acid.

14. The method for manufacturing record disks according to claim 12, wherein said dispersant for the pigment is a nonionic surfactant.

15. The method for manufacturing record disks according to claim 9, wherein said sheet mainly made of a vinyl resin is composed of methyl polymethacrylate incorporated with a lubricant of higher fatty acid, pigment and dispersant for the pigment.

16. The method for manufacturing record disks according to claim 9, wherein said sheet mainly made of a vinyl resin is composed of a vinyl chloride resin incorporated with an MBS-based reinforcing agent, acrylic-based improver as the processing aid, lubricant, organotin-based stabilizer, epoxidized soybean oil and powdered titanium.
